# EUROPEAN PATENT APPLICATION

(11) **EP 4 036 569 A1**
(43) Date of publication of application: **03.08.2022**
(21) Application number: 19946781.2
(22) Date of filing: 26.09.2019
(51) Int. Cl.: G01N 30/06, G01N 30/72, G01N 30/88

(54) **METHOD FOR ANALYZING 5-FLUOROURACIL AND 5-FLUORODIHYDROURACIL**

(71) Applicant: Shimadzu Corporation, Kyoto-shi Kyoto 604-8511 (JP)
(72) Inventor: MOREAU, Stephane, 47269 Duisburg (DE); TOINON, Doriane, 77448 Marne la Vallee Cedex 2 (FR); HUTEAU, Alban, 77448 Marne la Vallee Cedex 2 (FR)
(74) Representative: Müller-Boré & Partner Patentanwälte PartG mbB
(86) International application number: PCT/JP2019/038058
(87) International publication number: WO 2021/059463

(57) **Abstract**

There is provided an analysis method including: dispensing step of sucking out a fixed amount of liquid from a specimen container stored with blood collected from a subject and a fixed amount of liquid from a reagent container stored with reagent, and dispensing the liquids into a reaction container; mixing step of mixing in the reaction container the blood and the reagent dispensed in the dispensing step; stirring step of stirring the mixture obtained in the mixing step; filtrating step of filtrating precipitant generated in the stirring step so as to collect filtrate; separating step of separating the filtrate generated in the stirring step into each component through liquid chromatography; and analyzing step of analyzing the respective components separated in the separating step using a mass spectrometer, and carrying out qualitative analysis and quantitative analysis of at least one of 5-fluorouracil and 5-fluorodihydrouracil in the blood based on obtained mass spectrometry data. The above respective steps are carried out automatically, further comprising a diluting step of diluting the liquid obtained from at least one of the dispensing step, the mixing step, the stirring step, and the filtrating step. If said method is used, the abundance ratio of uracil to dihydrouracil in the blood may be measured easily. Further according to this method, the abundance ratio of uracil to dihydrouracil may be measured easily and quickly.

## Description

### TECHNICAL FIELD

The present invention relates to a method for analyzing 5-fluorouracil and 5-fluorodihydrouracil. More specifically, the present invention relates to a method for analyzing uracil and dihydrouracil in human blood.

### BACKGROUND ART

Administering 5-fluorodihydrouracil (may be referred to as uracil hereafter) as an anticancer agent against malignant tumors such as cancer of the digestive system, oropharynx, breast, etc. to patients is commonly known. However, it is known that when uracil is administered intravenously, it is metabolized immediately in the liver through activity of the dihydropyrimidine dehydrogenase enzyme (may be referred to as DPD hereafter).

Due to metabolism, the amount of uracil effectively acting within the body is approximately 10% of the administered amount. Since the amount effectively working in this manner is small, administration of a very large amount of uracil compared to other typical drugs is necessary.

On the other hand, the activity and the amount of DPD greatly differ according to the individual, and when uracil is administered to a patient with low DPD activity, more uracil than normal acts effectively, thereby generating serious side effects. Therefore, accurate monitoring of each person's DPD activity is required.

As a method for analyzing DPD activity, there is a method utilizing the abundance ratio of uracil to 5-fluorodihydrouracil (may be referred to as dihydrouracil hereafter) in blood plasma. Furthermore, in recent years, appropriate administration design is carried out for each patient, and the importance of monitoring (TDM) to conduct appropriate pharmacotherapy is also indicated, and once 5-fluorouracil is administered to a subject, measurement of the 5-fluorouracil concentration in the blood of the subject is carried out, and quantification of uracil alone is also carried out even upon confirmation of whether or not the appropriate amount has been administered etc. While respective amounts of uracil and dihydrouracil in blood plasma are measured through liquid chromatography-mass spectrometry (LCMS), they cannot be measured from collected blood directly through LCMS, and once uracil and dihydrouracil are extracted from the blood by either liquid-liquid extraction (e.g., Non-Patent Document 1) or solid-phase extraction (e.g., Non-Patent Document 2), the uracil and dihydrouracil are quantified.

### Prior Art Documents

### Non-Patent Documents

Non-Patent Document 1: Journal of Pharmaceutical and Biomedical Analysis Volume 142, 5 August 2017, Pages 125-135
Non-Patent Document 2: Journal of Chromatographic Science, Volume 50, Issue 10, November/December 2012, Pages 877 & #8211; 884

### DISCLOSURE OF THE INVENTION

### Problems to be Solved by the Invention

However, since the method described above requires complicated procedures for an analyst and requires a fixed time for the extracting step, a quicker and easier method for analyzing uracil and/or dihydrouracil is in demand.

### Means of Solving the Problems

The present invention aims to provide an easy method for measuring the abundance ratio of uracil to dihydrouracil in blood. The present invention further aims to provide an easy and quick method for measuring the abundance ratio of uracil to dihydrouracil.

That is, the present invention is;
an analysis method comprising:
dispensing step of sucking out a fixed amount of liquid from a specimen container stored with blood collected from a subject and a fixed amount of liquid from a reagent container stored with reagent, and dispensing the liquids into a reaction container;
mixing step of mixing in the reaction container the blood and the reagent dispensed in the dispensing step;
stirring step of stirring the mixture obtained in the mixing step;
filtrating step of collecting filtrate by filtrating precipitant generated in the stirring step;
separating step of separating the filtrate generated in the stirring step into each component through liquid chromatography; and
analyzing step of analyzing the respective components separated in the separating step using a mass spectrometer, and carrying out qualitative analysis and quantitative analysis of at least one of 5-fluorouracil and 5-fluorodihydrouracil in the blood based on obtained mass spectrometry data; wherein
the above respective steps are carried out automatically, further comprising a diluting step of diluting the liquid obtained from at least one of the dispensing step, the mixing step, the stirring step, and the filtrating step.

### Results of the Invention

According to the present invention, the abundance ratio of uracil to dihydrouracil in blood may be measured easily without needing to extract the uracil and dihydrouracil from the blood in advance. Further according to the present invention, the abundance ratio of uracil to dihydrouracil may be measured easily and quickly.

### BRIEF DESCRIPTIONS OF DRAWINGS

[FIG. 1] a plan view illustrating a First Embodiment of a pretreatment apparatus;
[FIG. 2A] a cross-sectional view illustrating an exemplary reaction container;
[FIG. 2B] a cross-sectional view illustrating an exemplary collecting container;
[FIG. 2C] a cross-sectional view illustrating an exemplary state of the collecting container attached to the reaction container;
[FIG. 3A] a structural cross-sectional view illustrating a structure of a stirring part;
[FIG. 3B] a structural cross-sectional view illustrating an operating state of the stirring part;
[FIG. 4A] a structural cross-sectional view illustrating a structure of a filtration port;
[FIG. 4B] a structural cross-sectional view illustrating the reaction container and the collecting container attached to the filtration port;
[FIG. 5] a schematic diagram of the structure of flow channels illustrating a structure of a negative pressure load mechanism;
[FIG. 6] a plan view illustrating a Second Embodiment of the pretreatment apparatus;
[FIG. 7] a graph giving the result from conducting mass spectrometry of separated uracil, which is provided by diluting by a dilution ratio of five times a filtrate obtained using the pretreatment apparatus illustrated in FIG. 1, and separating the resulting filtrate into each component through liquid chromatography;
[FIG. 8] a graph giving the result from conducting mass spectrometry of separated uracil, which is provided by diluting by a dilution ratio of fifteen times a filtrate obtained using the pretreatment apparatus illustrated in FIG. 1, and separating the resulting filtrate into each component through liquid chromatography;
[FIG. 9] a graph giving the result from conducting mass spectrometry of separated uracil, which is provided by diluting by a dilution ratio of forty times a filtrate obtained using the pretreatment apparatus illustrated in FIG. 1, and separating the resulting filtrate into each component through liquid chromatography;
[FIG. 10] a graph giving the result from conducting mass spectrometry of separated uracil, which is provided by diluting by a dilution ratio of fifty times a filtrate obtained using the pretreatment apparatus illustrated in FIG. 1, and separating the resulting filtrate into each component through liquid chromatography;
[FIG. 11] a graph giving the result from conducting mass spectrometry of separated dihydrouracil, which is provided by diluting by a dilution ratio of five times a filtrate obtained using the pretreatment apparatus illustrated in FIG. 1, and separating the resulting filtrate into each component through liquid chromatography;
[FIG. 12] a graph giving the result from conducting mass spectrometry of separated dihydrouracil, which is provided by diluting by a dilution ratio of fifteen times a filtrate obtained using the pretreatment apparatus illustrated in FIG. 1, and separating the resulting filtrate into each component through liquid chromatography;
[FIG. 13] a graph giving the result from conducting mass spectrometry of separated dihydrouracil, which is provided by diluting by a dilution ratio of forty times a filtrate obtained using the pretreatment apparatus illustrated in FIG. 1, and separating the resulting filtrate into each component through liquid chromatography;
[FIG. 14] a graph giving the result from conducting mass spectrometry of separated dihydrouracil, which is provided by diluting by a dilution ratio of fifty times a filtrate obtained using the pretreatment apparatus illustrated in FIG. 1, and separating it into each component through liquid chromatography;
[FIG. 15] a graph giving the result from conducting mass spectrometry of separated uracil, which is provided by separating a filtrate obtained using the pretreatment apparatus illustrated in FIG. 1 into each component through liquid chromatography without dilution; and
[FIG. 16] a graph giving the result from conducting mass spectrometry of separated dihydrouracil, which is provided by separating a filtrate obtained using the pretreatment apparatus illustrated in FIG. 1 into each component through liquid chromatography without dilution.

### DESCRIPTION OF EMBODIMENT

The present invention is described in detail below.

Blood is first collected from a target (referred to as subject hereafter) requiring examination of DPD activity, such as a patient to have uracil administered, or a patient to possibly have uracil administered in the future, etc., and is stored in specimen containers. The collecting method is not particularly limited, and an amount of blood necessary for LCMS to be described later should be collected using a syringe or the like.

While the blood collected as described above is stored in specimen containers, all of the collected blood may be stored in specimen containers. The amount of blood to be stored in multiple specimen containers is 5 to 50 µl, for example.

Furthermore, while the blood may be stored in the specimen containers as is, from the viewpoint of improvement in analytical precision, blood serum separated from the blood, for example, through centrifugal separation may also be stored in the specimen containers. Moreover, blood plasma separated from the blood through centrifugal separation, etc. may be stored in the specimen containers after an anticoagulant etc. is added to the blood.

On the other hand, a reagent container storing a reagent is prepared separately. The reagent is a reagent for removing protein from blood (deproteinization), and is preferably a mixture of acetonitrile and formic acid, from the viewpoint of effectively removing protein. From the viewpoint of protein removal efficiency, as to the ratio of acetonitrile to formic acid, the amount of formic acid is 0.2% to 5%, more preferably 0.5% to 2%, given the total weight of acetonitrile and formic acid is 100%.

The fixed amounts of blood or liquid as reagent is dispensed into a reaction container from the specimen container or the reagent container, correspondingly (dispensing step). The dispensing method may be, for example, a method of sucking out the liquid using a syringe etc. Amounts to be dispensed are determined from the respective ranges of the amount stored in the specimen container and amount stored in the reagent container described above.

The reaction container is preferably disposable from the viewpoint of evading contamination of the specimen or reagent, as well as analytical precision and easy operation, and it is therefore preferable to prepare a reaction container for carrying out analysis at least several times. Furthermore, the reaction container may be used repeatedly and not be disposable. In the case of using the reaction container repeatedly, for example, it may be washed with an organic solvent that does not react with blood and the reagent after completion of each analysis.

The blood and the reagent dispensed in the dispensing step described above are mixed in the reaction container (mixing step). The dispensed blood and reagent are injected into the reaction container, mixed and a mixture is obtained.

The mixture obtained in the mixing step described above is then stirred (stirring step). The method of stirring in the stirring step is a method using a reaction container in which a stirring mechanism is provided, for example. The stirring mechanism may be a mechanism for rotating an internal stirring bar or stirring blade using an external motor, an electromagnet, etc., or a mechanism for rotating, oscillating or swinging the reaction container. Furthermore, multiple mechanisms may also be combined.

Since precipitate is generated at the stirring step described above, filtrate is collected by filtrating the generated precipitate (filtrating step). The generated precipitate is generally protein, and the target uracil and dihydrouracil exist in the filtrate.

The filtration method may be a method of pouring the liquid including the precipitate from the reaction container described above into a container provided with a separative membrane, separating the precipitate by the separative membrane, and collecting filtrate. From the viewpoint of easy operation, use of a reaction container provided with a filtrating mechanism such as a separative membrane is preferred. While filtration may be carried out under atmospheric pressure, a method of applying a negative pressure, for example, on the outside of the reaction container, and filtrating while sucking out the filtrate is preferred from the viewpoint of speeding up the analysis method. Examples of the separative membrane to be used are a quartz fiber separative membrane, a glass fiber separative membrane, and a resin separative membrane.

The resin used for the resin separative membrane may be, for example, polytetrafluoroethylene, nylon, polypropylene, polyvinylidene fluoride, an acrylic copolymer, mixed cellulose, nitrocellulose, polyether sulfone, etc. Furthermore, an ion exchange membrane, a glass fiber membrane etc. may be used as the separative membrane. Polytetrafluoroethylene is particularly preferred of these from the viewpoint of chemical stability.

The separative membrane to be used in the filtrating step is preferably subjected to a conditioning process of wetting the separative membrane with a predetermined liquid, so as to heighten separability, stability, and reactivity of the precipitate. Use of an alcohol, such as isopropanol, methanol, etc. as the liquid is preferred.

It is preferable to collect the filtrate separated from the precipitate in a different container or the like from the viewpoint of easiness of the diluting step described later. For example, in the case of using the reaction container provided with a filtrating mechanism such as a separative membrane, the filtrate may be collected by providing a liquid discharge outlet lower than the separative membrane, attaching a container for receiving the filtrate from the discharge outlet, and filtrating.

The liquid obtained in any of the dispensing step to the filtrating step described above is diluted (diluting step). While the liquid used for dilution (it may be referred to as diluting liquid, hereafter) is not limited as long as it does not react with the liquids obtained in each step, water is typically used. In the diluting step, from the viewpoint of diluting uniformly, after adding the diluting liquid to the liquid, it is preferable to stir the container by oscillation etc.. Duration of stirring is around 50 to 200 seconds from the viewpoint of required time for all of the steps and diluting uniformly.

Different from conventional solid-phase extraction and liquid-liquid extraction, the filtrate obtained in the filtrating step using an organic solvent such as acetonitrile or formic acid as described above reacts with the organic solvent in the blood, eliminating the precipitated protein. However, many contaminants other than uracil and dihydrouracil to be analyzed are included in the liquids obtained in the dispensing step to the filtrating step. Therefore, even if the filtrate obtained in the filtrating step directly is subjected to LCMS described later, different results from the actual signal intensity will eventuate since ion suppression or enhancement occurs due to the contaminants existing in the filtrate when ionizing the uracil and dihydrouracil, and thereby adversely influencing the signal intensity (matrix effect).

As described above, according to the present invention, since the liquids obtained in the respective steps before subjected to LCMS are diluted using a diluting liquid such as water so as to make the contaminants less than a fixed concentration, the matrix effect due to the contaminants reduces when ionizing the uracil and dihydrouracil through LCMS, resulting in high efficiency in a separating step and an analyzing step described later. Furthermore, since the diluting liquid is typically a liquid that does not react with the reagent, each concentrations within a mixed liquid of the specimen and the reagent may change, but it is confirmed that there are no adverse effects on the ionization of the uracil and dihydrouracil in the step of conducting mass spectrometry described above. This method does not require an extracting step of specifying components through conventional liquid-liquid or solid-phase extraction etc., and allows analysis of the uracil and dihydrouracil through LCMS easily and quickly by diluting.

Magnification of dilution (dilution rate) in this specification denotes the total of a liquid volume of 1 before dilution and the volume ratio of the added diluting liquid. That is, for example, in the case of adding a diluting liquid volume of 4 to the liquid volume of 1 before dilution, the dilution rate is 5, that is, 5-fold dilution. In the case of adding a diluting liquid one tenth the liquid volume of 1 before dilution to the liquid volume of 1 before dilution, the dilution rate is 1.1 (1.1-fold dilution).

According to the present invention, only a very small amount of the diluting liquid should be added in the diluting step, and the dilution rate should be greater than 1. The dilution rate is preferably 1.1 times or greater, more preferably 2 times or greater. The upper limit of the dilution rate is preferably 50 times or less from the viewpoint of reduction of the matrix effect described above and precision in the separating step and the analyzing step.

When carrying out the diluting step before the filtrating step, the dilution rate is preferably within the range given above; however, from the viewpoint of further heightening analytical precision, the dilution rate is preferably 5 to 50 times, more preferably 8 to 13 times. Dilution improves quantitativeness of LCMS described later.

After the diluting step, the diluted filtrate (may be referred to as dilute filtrate hereafter) may be collected in a separately prepared collecting container (collecting step). The collected dilute filtrate is conveyed to a position of conducting LCMS described later (conveying step) so as to be used in analysis of uracil and dihydrouracil. Note that the conveying step may be provided after the diluting step even when the collecting step is not included.

One or more of the collecting container may be used. The number of the collecting container is appropriately set according to the amount of the dilute filtrate.

After the diluting step and the collecting step described above, the dilute filtrate is subjected to analysis of liquid chromatography, separating each component included in the dilute filtrate (separating step). When the conveying step is included, the separating step is carried out after the conveying step. Liquid chromatography conditions such as column, column temperature, flow velocity etc. are appropriately set so as to precisely separate the components included in the dilute filtrate.

From the viewpoint of separability of uracil and dihydrouracil, the mobile phase used in liquid chromatography preferably uses either a mixture of water and acetic acid or a mixture of acetonitrile and acetic acid. In the case of the mixture of water and acetic acid, given the total mass of water and acetic acid is 100%, the amount of acetic acid is preferably within a range of 0.05 to 1.0 mass%, more preferably 0.1 to 0.8 mass%.

In the case of the mixture of acetonitrile and acetic acid, given the total mass of acetonitrile and acetic acid is 100%, the amount of acetic acid is preferably within a range of 0.05 to 1.0 mass%. Use of these two kinds of mixtures described above as mobile phase is preferred.

The uracil or dihydrouracil separated in the separating step described above undergoes qualitative analysis and quantitative analysis based on mass spectrometry data obtained through mass spectrometry (analyzing step). Measurement conditions for mass spectrometry are appropriately set from the viewpoint of analytical precision.

The dispensing step, the mixing step, the stirring step, the filtrating step, the diluting step, the separating step, and the analyzing step are respectively carried out automatically. Furthermore, in the case of including the collecting step and the conveying step, it is preferable to carry out both of these steps automatically. By automatically carrying out the respective steps using apparatus having various functions to achieve the operations described above, uracil and dihydrouracil may be analyzed without needing to carry out each individual operation by an analyst.

In order to carry out each step automatically, it is preferable to control so as to operate various functions under preset conditions. For example, a method of using a software executed on a personal computer or an exclusive computer may be used. Use of a personal computer or a control unit having an exclusive computer for controlling each step so as to carry out the respective steps automatically is preferred.

Some of the respective steps described above may be carried out collectively using a single apparatus; however, it is preferable to carry out from the dispensing step to the filtrating step using a single apparatus (may be referred to as pretreatment apparatus, hereafter) from the viewpoint of easiness and quickness of analysis. When carrying out from the dispensing step to the filtrating step using a single pretreatment apparatus, from a viewpoint of easiness and quickness of analysis, the pretreatment apparatus is further preferably a pretreatment apparatus including:
a specimen rack holding one or more of a specimen container stored with blood collected from a subject; a reagent rack structured so as to hold one or more of a reagent container;
a dispensing mechanism for sucking out a fixed amount of liquid from the specimen container and a fixed amount of liquid from the reagent container, and dispensing the liquids into the reaction container;
a stirring mechanism for stirring the mixture stored in the reaction container;
a filtrating mechanism for filtrating precipitant in the reaction container so as to collect filtrate; and
a control unit for controlling the dispensing mechanism so as to suck out the blood from the specimen container and dispense the blood into the reaction container, and suck out the reagent from the reagent container and dispense the reagent into the reaction container.

When the analysis method according to the present invention further includes a collecting step and a conveying step between the diluting step and the separating step, the pretreatment apparatus is preferably a pretreatment apparatus further including:
a holding mechanism that is movable between a first position and a second position, and that holds and conveys the collecting container, and
the control unit controls the holding mechanism so as to convey the collecting container from the first position to the second position after the diluting step.

By further including the mechanisms described above, the collecting step and the conveying step may be carried out by a single pretreatment apparatus. Use of such an apparatus allows quicker analysis of uracil and dihydrouracil, and is thus further preferred.

The present invention is described in detail through embodiments below; however, the present invention is not limited thereto.

### <First Embodiment>

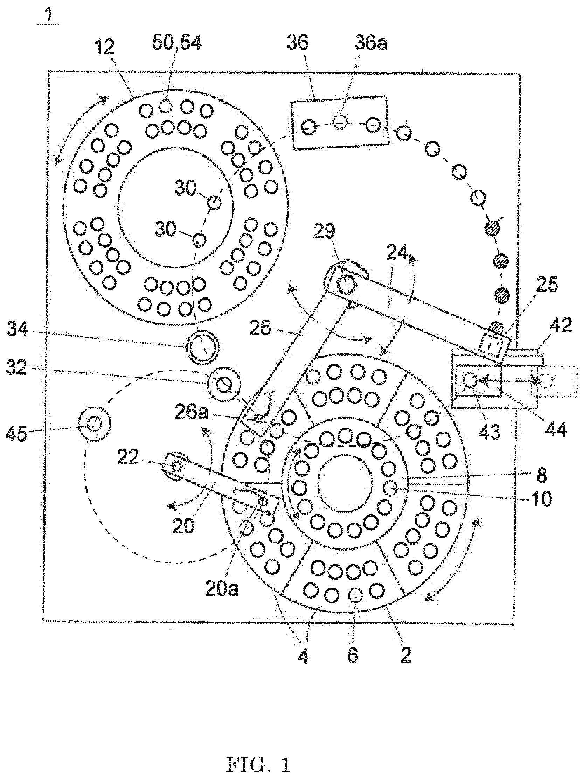

An embodiment of the analysis method for analyzing uracil and dihydrouracil in blood using a pretreatment apparatus is described using FIG. 1.

A pretreatment apparatus 1 of a First Embodiment has pretreatment kits, each constituted by a prepared set of a reaction container 50 and a collecting container 54, and has treatment ports corresponding to the respective dispensing step to the filtrating step described above in order to carry them out.

The reaction container 50 and the collecting container 54 making the pretreatment kit are conveyed by a conveying arm 24 constituting a conveying mechanism. The conveying arm 24 has a holding part 25 for holding the reaction container 50 and the collecting container 54 on the front-end side, and rotates in a horizontal plane around a vertical axis 29, which holds the base end part, so as for the holding part 25 to draw an arc-shaped orbit. A dispensation port, stirring ports, and filtration ports, which are conveyance destinations of the reaction containers 50 and the collecting containers 54, are provided along the arc-shaped orbit drawn by the holding part 25.

A specimen rack 2 on which specimen containers 6 that are stored with blood are placed is provided, and a sampling arm 20, which is a sampling part for collecting specimens from the specimen containers placed on the specimen rack 2, is provided near the specimen rack 2. Racks 4 for holding a plurality of the specimen containers 6 are arranged in an annular shape in the specimen rack 2. The specimen rack 2 rotates in the horizontal plane so as to move the racks 4 in the circumferential direction such that a desired specimen container 6 is arranged at a predetermined sampling position by the rotation of the specimen rack 2. The sampling position is a position along the orbit of a sampling nozzle 20a at the end of the sampling arm 20, where a specimen is collected by the sampling nozzle 20a.

The sampling arm 20 makes rotating motions in the horizontal plane around a vertical axis 22, which pierces through the base end part, and makes up-and-down movements in the vertical direction along the axis 22. The sampling nozzle 20a is held on the end side of the sampling arm 20 such that the end faces vertically downward, moving to draw an arc-shaped orbit in the horizontal plane and making up-and-down movements by the sampling arm 20.

A dispensation port 32 is provided at a position along the orbit of the sampling nozzle 20a and the orbit of the holding part 25 of the conveying arm 24. The dispensation port 32 is a port for the sampling nozzle 20a to dispense blood in an unused reaction container 50. The unused reaction container 50 is placed in the dispensation port by the conveying arm 24.

On the inner side of the specimen rack 2, a reagent rack 8 on which reagent containers 10 are arranged is provided, and a reagent arm 26 (reagent-adding part) for collecting reagent from the reagent containers arranged on the reagent rack 8 is provided. The reagent arm 26 is supported at its own base end by a vertical axis 29 shared with the conveying arm 24, and rotates in the horizontal plane as well as makes up-and-down movements. A reagent-adding nozzle 26a is provided on the end part of the reagent arm 26 such that the end faces vertically downward, making the same motions to draw an arc-shaped orbit in the horizontal plane and the same up-and-down movements as the holding part 25 of the conveying arm 24.

The reagent rack 8 rotates in the horizontal plane independently from the specimen rack 2. Multiple reagent containers 10 are arranged in an annular shape in the reagent rack 8, and the reagent containers 10 are conveyed in the rotation direction of the reagent rack 8 by the rotation thereof so that a desired reagent container 10 is arranged at a predetermined reagent-collecting position. The reagent-collecting position is a position along the orbit of the reagent-adding nozzle 26a of the reagent arm 26, and is a position for collecting reagent using the reagent-adding nozzle 26a. The reagent-adding nozzle 26a draws in a predetermined reagent, and then dispenses the drawn-in reagent into the reaction container 50 placed in the dispensation port 32 so as to add the reagent to the blood.

A pretreatment kit mounting part 12 is provided at a different position than the specimen rack 2 and the reagent rack 8. The pretreatment kit mounting part 12 is structured such that multiple sets of pretreatment kits, each made up of stacked unused reaction container 50 and collecting container 54, are arranged in an annular shape. The pretreatment kit mounting part 12 rotates in the horizontal plane so as to move the pretreatment kits in the circumferential direction, and arranges an arbitrary set of the pretreatment kits at positions along the orbit of the holding part 25 of the conveying arm 24. The conveying arm 24 may hold either an unused reaction container 50 or collecting container 54 arranged at a position along the orbit of the holding part 25.

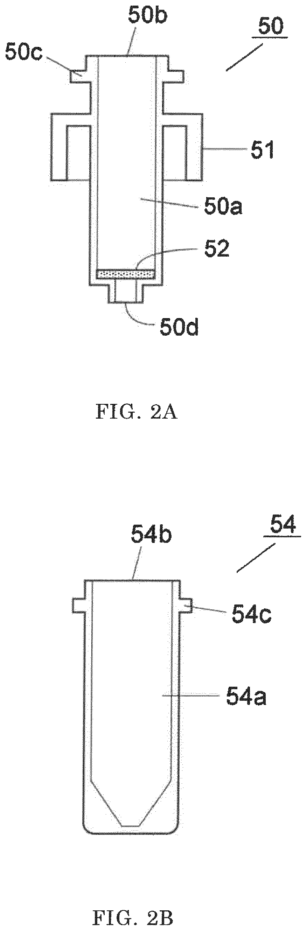

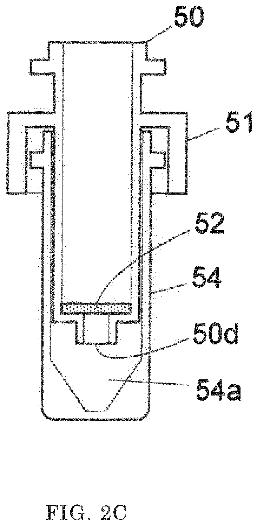

The reaction container 50 and the collecting container 54 configuring a pretreatment kit are described using FIGS. 2A, 2B and 2C.

The reaction container 50 is a cylindrical container having an internal space 50a to be stored with blood or reagent. A separative membrane 52 is provided at the bottom of the internal space 50a. The separative membrane given as an example described above is installed as the separative membrane 52.

An opening 50b for injecting blood or reagent is formed in the top surface of the reaction container 50. A flange part 50c projecting in the circumferential direction for engaging with the holding part 25 of the conveying arm 24 described later is provided on the upper part of the outer peripheral surface.

A skirt part 51, which protrudes in the circumferential direction, extends only a fixed distance downward, and surrounds the circumference of the outer peripheral surface, is provided below the flange part 50c. While described later, the skirt part 51 is for making space on the inner side of the skirt part 51 a closed space by being close to the edge of a filtration port 30 when housed along with the collecting container 54 in the filtration port 30.

The collecting container 54 is a cylindrical container for housing the lower part of the reaction container 50 so as to collect filtrate discharged from a discharge outlet 50d of the reaction container 50, as illustrated in FIGS. 2B and 2C. It has an opening 54b formed in the top surface for inserting the lower part of the reaction container 50, and an internal space 54a for housing a part lower than the skirt part 51 of the reaction container 50. In the same manner as the reaction container 50, a flange part 54c projecting in the circumferential direction for engaging with the holding part 25 of the conveying arm 24 is provided on the upper part of the outer peripheral surface.

The upper part of the collecting container 54 enters the inner side of the skirt part 51 when attached to the reaction container 50. The outer diameter of the reaction container 50 and the inner diameter of the collecting container 54 are designed such that a slight gap is generated between the outer peripheral surface of the reaction container 50 and the inner peripheral surface of the collecting container 54 when the reaction container 50 is housed in the internal space 54a of the collecting container 54. The reaction container 50 and the collecting container 54 are mounted on the pretreatment kit mounting part 12 in a state where the lower part of the reaction container 50 is housed in the collecting container 54 (state of FIG. 2C).

The pretreatment apparatus 1 illustrated in FIG. 1 has filtration ports 30 and stirring ports 36a provided. The filtration ports 30 are provided at two positions on the inner side of the pretreatment kit mounting part 12. Three of the stirring ports 36a are provided in the stirring part 36, which is provided near the pretreatment kit mounting part 12.

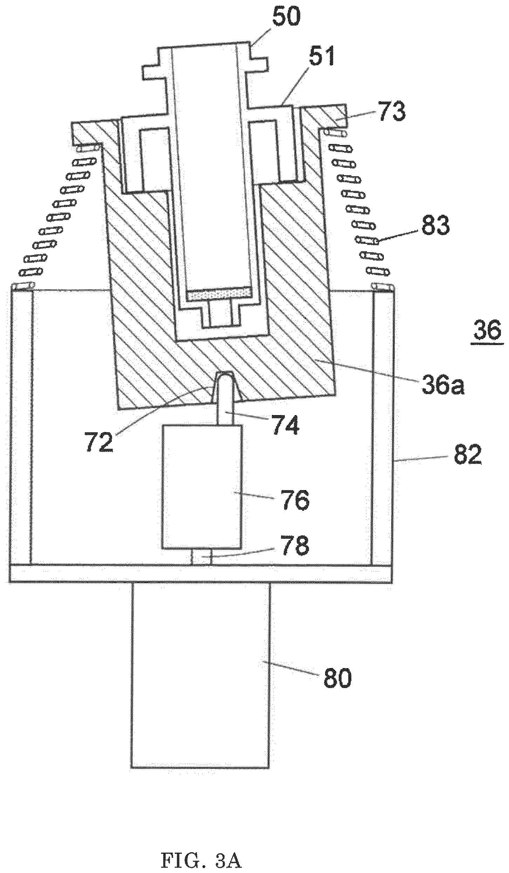

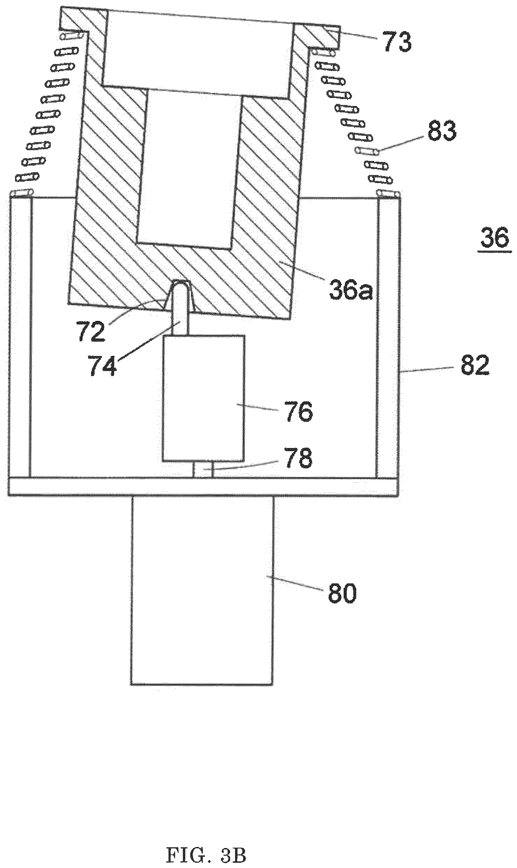

Configuration of the stirring part 36 is described using FIGS. 3A and 3B. FIGS. 3A and 3B illustrate one of the stirring ports 36a of the stirring part 36.

The stirring port 36a of the stirring part 36 is a container for housing the reaction container 50. The stirring port 36a is driven by a stirring mechanism provided therebelow.

The stirring mechanism for driving the stirring port 36a is described. A rotating body 76 is arranged below the stirring port 36a, and a drive shaft 74 is attached perpendicularly at a position deviating from the center of the top surface of the rotating body 76. The upper end of the drive shaft 74 is inserted in a support hole 72 formed in the bottom surface of the stirring port 36a. The rotating body 76 is supported by a rotation shaft 78 that is rotated by a motor 80, the rotating body 76 is rotated by drive of the motor 80, and the drive shaft 74 accordingly rotates in the horizontal plane.

A support frame 82 is attached on the motor 80. The support frame 82 has side walls extending vertically upward from the motor 80 side, and ends of elastic members 83 such as coil springs, for example, are attached to respective upper ends of the side walls. The other ends of the elastic members 83 are attached to the upper outer surface of the stirring port 36a, elastically holding the upper part of the stirring port 36a. The elastic members 83 are provided at multiple places (e.g., 4 places) evenly along the circumference of the stirring port 36a.

If the reaction container 50 stored with blood and reagent is housed in the stirring port 36a and the motor 80 is driven, the lower end part of the collecting container 72 rotates as a result of rotation of the drive shaft 74 in the horizontal plane, as illustrated in FIG. 3B. Accordingly, the inside of the reaction container 50 housed in the stirring port 36a is stirred, thereby mixing the blood and reagent. Once the blood and reagent are mixed, the mixture is conveyed from the stirring port to the filtration port.

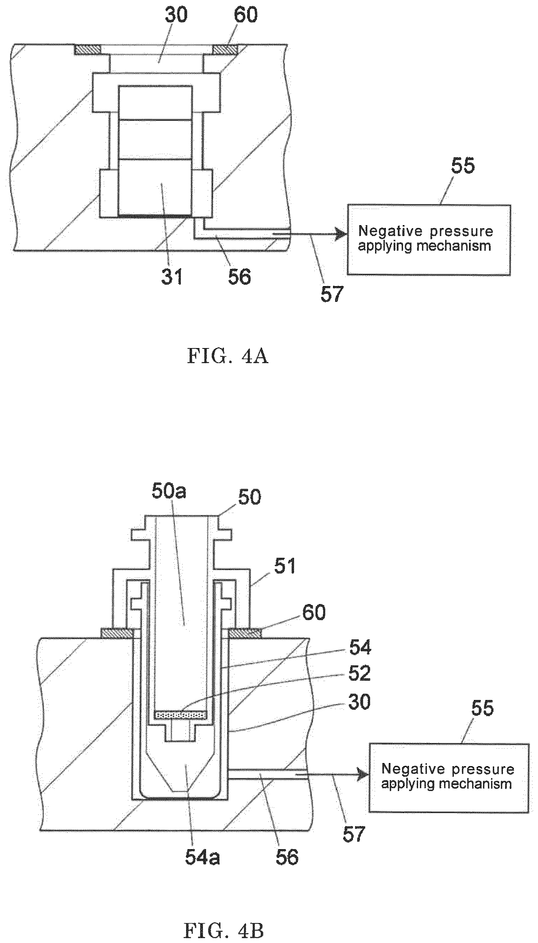

A negative pressure load mechanism 55 (see FIGS. 4A and 4B), which is a pressure load applying part, is connected to the filtration port 30, and is structured so as to apply a negative pressure on the pretreatment kit placed in the filtration port 30.

The filtration port 30 is described using FIGS. 4A and 4B.

The filtration port 30 is configured by a recessed part for housing the reaction container 50 and the collecting container 54 with the lower part of the reaction container 50 housed in the collecting container 54. An elastic ring-shaped sealing member 60 is provided on the rim of the filtration port 30. The material of the sealing member 60 is an elastic material such as silicone rubber or ethylene-propylene-diene rubber (EPDM), for example. As illustrated in FIG. 4B, when the reaction container 50 and the collecting container 54 are housed in the filtration port 30 with the lower part of the reaction container 50 housed in the collecting container 54, the lower end of the skirt part 51 of the reaction container 50 makes contact with the sealing member 60, closing the space surrounded by the inner side surface of the skirt part 51 and the inner side surface of the filtration port 30.

The inner side surface of the filtration port 30 is connected to the negative pressure load mechanism 55 via a flow channel 56. While a specific configuration of the negative pressure load mechanism 55 will be described later, the negative pressure load mechanism 55 applies a negative pressure to the filtration port 30 side using a vacuum pump.

As a result of the negative pressure load mechanism 55 applying a negative pressure to the filtration port 30 with the reaction container 50 and the collecting container 54 housed in the filtration port 30, the space surrounded by the inner side surface of the skirt part 50 and the inner side surface of the filtration port 30 is in a depressurized state. The inner space 54a of the collecting container 54 connects to the depressurized space. Since the top surface of the reaction container 50 is open to the atmosphere, pressure difference occurs between the internal space 50a of the reaction container 50 and the internal space 54a of the collecting container 54 via the separative membrane 52, filtrate of a sample solution stored in the internal space 50a of the reaction container 50 passes through the separation membrane 52 and is discharged to the internal space 54a side of the collecting container 54, thereby collecting the filtrate.

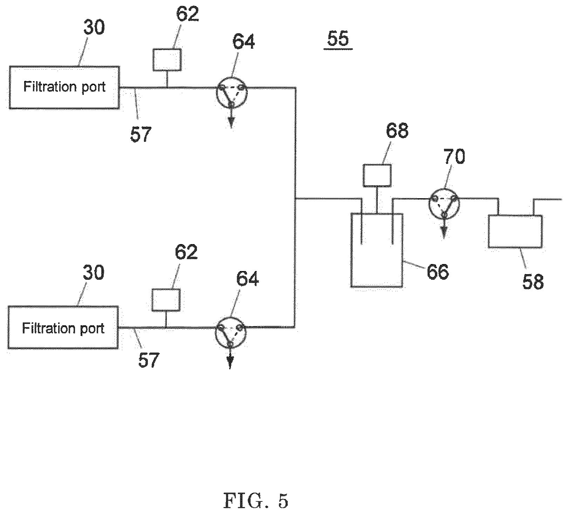

An example of the negative pressure load mechanism 55 is illustrated in FIG. 5.

Two of the filtration ports 30 are connected to a common vacuum tank 66. Flow channels 57 respectively connecting between the vacuum tank 66 and the respective filtration ports 30 each include a pressure sensor 62 and a three-way valve 64. Pressure of the filtration port 30 is detected by the pressure sensor 62. The three-way valve 64 may be in any one of a state connecting between the filtration port 30 and the vacuum tank 62, state where the filtration port 30 side of the flow channel 57 is open to the atmosphere (state in the drawing), or state where the end part on the filtration port 30 side of the flow channel 57 is closed.

A pressure sensor 68 is connected to the vacuum tank 66, a vacuum pump 58 is also connected thereto via a three-way valve 70, and as needed, the vacuum pump 58 may be connected to the vacuum tank 66 so as to adjust the pressure within the vacuum tank 66.

When collecting filtrate from either of the filtration ports 30, once that filtration port 30 is connected to the vacuum tank 66, and value of the power sensor 62 for detecting the pressure of that filtration port 30 is adjusted so as to be a predetermined value, the end part on the filtration port 30 side of the flow channel 57 is closed. As a result, the inside of the filtration port 30 becomes a closed system, the depressurized state within the filtration port 30 is maintained, and extraction of the filtrate is carried out.

Returning to FIG. 1, since the pretreatment apparatus 1 sends the filtrate collected in the collecting container 54 to the subsequent diluting step, a collecting container discharge part 42 is provided at a casing side end part. The collecting container discharge part 42 is provided with a moving part 44 for moving in directions (directions of arrows in FIG.1) in the horizontal plane by a driving mechanism having a rack pinion mechanism. The discharge port 43 for placing the collecting container 54 to store the filtrate is provided on the top surface of the moving part 44.

Operations of the specimen rack 2, the reagent rack 8, A pretreatment kit mounting part 12, the sampling arm 20, the conveying arm 24, the reagent arm 26, the stirring part 36, the collecting container discharge 42, and the negative pressure load mechanism 55 provided in the pretreatment apparatus 1 are controlled by a control unit. The control unit is implemented by a computer provided in the pretreatment apparatus 1 or a software executed on the computer. To the control unit is connected an arithmetic processing unit that is implemented on a personal computer (PC) or an exclusive computer, for example, and the analyst manages the pretreatment apparatus 1 via the arithmetic processing unit.

The control unit is provided with a pretreatment means, a treatment status management means, and a random-access means. Each of these means are functions obtained through execution of the software by the computer that constitutes the control unit. As described above, multiple specimen containers are mounted in the specimen mounting part 2, specimens stored in these specimen containers are successively dispensed into the reaction containers 50, and are then conveyed to ports corresponding to the pretreatments to be carried out for the respective specimens.

The random-access means is structured so as to confirm the next treatment to be carried out for each specimen, confirm availability of a port corresponding to the treatment, and when there is an available port, convey the reaction container 50 or the collecting container 54 stored with a specimen to that port. Furthermore, when there is no available port corresponding to the treatment, as soon as that port is available, the target reaction container 50 or collecting container 54 is conveyed to that port. The random-access means is structured so as to confirm the treatment status of each port, and control the conveying arm 24 to convey the reaction container 50, in which the treatment in that port is completed, to a port for carrying out the next treatment.

The treatment status management means is structured so as to manage availability of each port and treatment status of each port. Availability of each port may be managed by storing information of in which port the reaction container 50 or collecting container 54 is placed. Furthermore, a sensor for detecting whether or not the reaction container 50 or the collecting container 54 is placed may be provided to each port so as to manage availability of each port based on signals from the sensor. Treatment status of each port may be managed by whether or not required time from placing the reaction container 50 or the collecting container 54 in the port to carrying out treatment in the port has passed.

When the reaction container 50 or the collecting container 54 is placed in each port, predetermined treatments may be carried out in those ports.

While two filtration ports 30 and three stirring ports 36a are provided here, an order of priority of ports provided for carrying out these same treatments is preset, and the random-access means is structured so as to use the ports successively in the order of descending priority. For example, in the case where both of the two filtration ports 30 are available when carrying out filtration on the specimen, the collecting container 54 is placed in the filtration port 30 of the highest order of priority, and the reaction container 50 is placed on that collecting container 54.

An exemplary operation for a specimen of the First Embodiment is described. First, whether or not the dispensation port 32 is available is confirmed, and if it is found available, the conveying arm 24 takes out from the pretreatment kit mounting part 12 an unused reaction container 50 for storing blood and places it in the dispensation port 32. The reaction container 50 and the collecting container 54 are mounted in the pretreatment kit mounting part 12 in a stacked state (state in FIG. 2C); however, the conveying arm 24 holds only the upper side reaction container 50 using the holding part 25 and conveys it to the dispensation port 32.

Blood is dispensed into the reaction container 50 using the sampling nozzle 20a. The sampling nozzle 20a that has dispensed the blood into the reaction container 50 is then cleaned in a cleaning port 45, in preparation for subsequent dispensation of blood. Reagent for the blood dispensed into the reaction container 50 is collected from the reagent container 10 by a reagent dispensing nozzle 26a, and is dispensed into the reaction container 50 in the dispensation port 32. Note that dispensation of the reagent into the reaction container 50 may be carried out before dispensation of the blood. Furthermore, a reagent dispensation port for dispensing reagent may be provided at a different position than the dispensation port 32, and the reaction container 50 may be placed in that reagent dispensation port by the conveying arm 24, so as to carry out dispensation of the reagent at that position.

Once the blood and the reagent are dispensed into the reaction container 50, availability of the stirring ports 36a is confirmed. If there is an available stirring port 36a, the reaction container 50 of the dispensation port 32 is placed in the available stirring port 36a by the conveying arm 24 and stirred. This stirring step is carried out for a preset fixed period of time, mixing together the blood and the reagent in the reaction container 50. During this stirring step, availability of the filtration ports 30 is confirmed, and when there is an available filtration port 30, the collecting container 54 is placed in the filtration port 30 by the conveying arm 24. The collecting container 54 to be placed in the filtration port 30 is the collecting container 54 paired with the reaction container 50 being stirred in the stirring port 36a, and the collecting container 54 that has been stacked and placed on the reaction container 50 being stirred in the pretreatment kit mounting part 12. Note that during the stirring step, the conveying arm 24 may also convey a reaction container 50 and a collecting container 54 for different blood.

Once the stirring step using the stirring part 36 is completed, the conveying arm 24 places the reaction container 50 on the collecting container 54 in the filtration port 30, resulting in the state illustrated in FIG. 4B. A predetermined negative pressure is applied to the filtration port 30 housing the reaction container 50 and the collecting container 54 by the negative pressure load mechanism 55. By maintaining the state where the negative pressure is applied to the filtration port 30 for a fixed period of time, precipitate in the reaction container 50 is filtrated so as to collect filtrate in the collecting container 54. Even during this filtrating step, the conveying arm 24 may convey another reaction container 50 or collecting container 54.

The filtrate retained in the collecting container 50 in this manner is discharged from the collecting container discharge part. After the separating step of adding a diluting liquid to the collecting container including the discharged filtrate, and stirring the dilute filtrate as needed so as to separate each component through liquid chromatography, and the analyzing step of analyzing the respective separated components through mass spectrometry, at least one of uracil and dihydrouracil is analyzed.

The following conditions are given as exemplary analysis conditions for liquid chromatography.
Apparatus: NEXERA (registered trademark) X2 or XR (manufactured by Shimadzu Corporation)
Column: Hypercarb, 3 pm, 150 * 2, 1 mm
Temperature: 25 degrees Centigrade
Mobile phase A: Water + 0.5% acetic acid
Mobile phase B: Acetonitrile + 0.5% acetic acid
Flow velocity: 250 µL/ min

The following conditions are given as exemplary analysis conditions for mass spectrometry.
Apparatus: LCMS-8060 ESI with capillary
Temperature: 380 degrees Centigrade (interface), 500 degrees Centigrade (heat block), 300 degrees Centigrade (DL)
Gas flow velocity: 3L (spray gas), 14L/ min (heated gas), 3L/ min (dried gas)
Mobile phase B: Acetonitrile + 0.5% acetic acid
Flow velocity: 250 µL/ min

### <Second Embodiment>

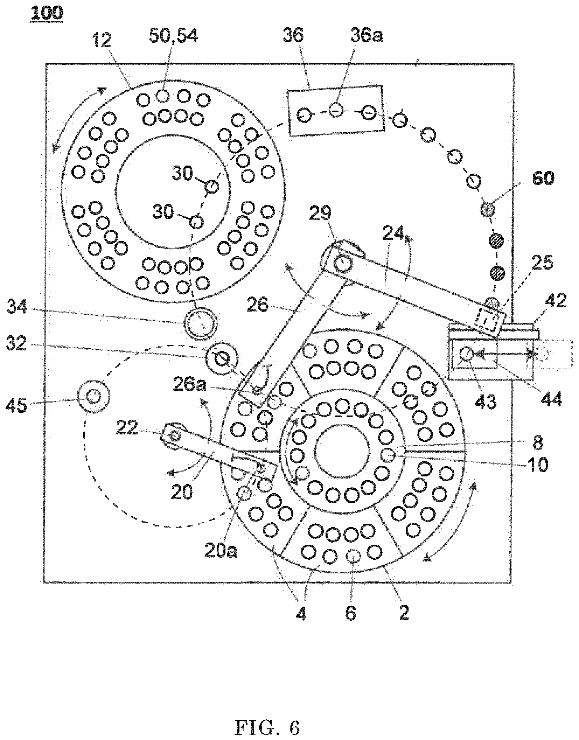

A Second Embodiment is described while referencing FIG. 6. Note that the following description mainly describes differences from the First Embodiment described above. Other points are the same as those of the First Embodiment.

According to the Second Embodiment, the pretreatment apparatus 1 described above further includes a holding mechanism which is movable between the first position and the second position, and which holds and conveys the collecting container: and
the control unit having a function of controlling the holding mechanism such that the collecting container is conveyed from the first position to the second position after the diluting step.

According to this embodiment, the pretreatment apparatus 1 includes the holding mechanism, which further includes dilution ports 60, is movable between a filtration port 30 (first position) of the pretreatment apparatus 1 and a dilution port 60 (second position), and holds a collecting container stored with filtrate collected in the filtration port.

Conveyance from the first position to the second position may use the conveying arm used in the First Embodiment described above, or a new conveying arm may be provided. The conveying arm has a holding mechanism for holding a collecting container, and conveys the collecting container from the filtration port to the dilution port.

A diluting liquid is dispensed from a separately provided diluting liquid tank (omitted from the drawing) using a separately provided diluting arm (omitted from the drawing) through the same control method as described above, added to the collecting container conveyed to the dilution port, and diluted until the filtrate is a desired amount. The diluting liquid tank may be provided in the pretreatment apparatus 1 separately, or otherwise it may be attached externally to the pretreatment apparatus.

As with the First Embodiment, once the steps through the filtrating step are completed, if the dilution port is available, the collecting container in the filtration port is conveyed to the dilution port by the conveying arm described above. A preset amount of the diluting liquid is added to the conveyed collecting container, and then the collecting container is conveyed to the collecting container discharge part described above so as to be discharged from the pretreatment apparatus.

The discharged collecting container is subjected to the separating step and the analyzing step as described above.

Note that a stirring mechanism having the same structure as the stirring mechanism described above may be provided in the dilution port.

The dilute filtrate discharged from the pretreatment apparatus and then held in the collecting container is subjected to the separating step and the analyzing step in the same manner as described above.

The present invention is described in detail below using working examples; however, the scope of the present invention is not limited hereto.

### Working Example 1

Using the pretreatment apparatus 1 (FIG. 1) illustrated in the First Embodiment described above, reagent is dispensed into a specimen including uracil and dihydrouracil, the specimen and the reagent are mixed and stirred, and the obtained precipitate is filtrated. The collecting container including the filtrate is collected, and the filtrate is diluted by adding a diluting liquid and then subjected to the separating step. Dilution rates for the filtrate are 5 times, 10 times, 40 times, and 50 times. Liquids with the respective dilution rates are separated into each component through liquid chromatography, and the respective separated components are analyzed using a mass spectrometer.

Conditions for liquid chromatography and mass spectrometry are as given below.
Analysis conditions for liquid chromatography
Apparatus: NEXERA (registered trademark) X2 (manufactured by Shimadzu Corporation) Column: Hypercarb, 3 µm, 150 * 2, 1 mm
Temperature: 25 degrees Centigrade
Mobile phase A: Water + 0.5% acetic acid
Mobile phase B: Acetonitrile + 0.5% acetic acid
Flow velocity: 250 µL/ min

### Analysis conditions for mass spectrometry

Apparatus: LCMS-8060 ESI with capillary
Temperature: 380 degrees Centigrade (interface), 500 degrees Centigrade (heat block), 300 degrees Centigrade (DL)
Gas flow velocity: 3L (spray gas), 14L/ min (heated gas), 3L/ min (dried gas)
Mobile phase B: Acetonitrile + 0.5% acetic acid
Flow velocity: 250 µL/ min

Furthermore, conditions for confirmation ions for identification and target ions for quantification in mass spectrometry are as given below.

### (Analysis of uracil)

### Confirmation ions

Running through m/z 112.95 (selected as precursor ions) at the first stage MS, fragmenting through a CID cell (collision cell), generating 96.050 m/z, and running through m/z: 96.050 (product ions)) at the second stage MS.

### Target ions

Ruuning through m/z 112.95 (selected as precursor ions) at the first stage MS, fragmenting through a CID cell, generating m/z 70.1, and running through m/z 70.1 (product ions)) at the second stage MS.

### (Analysis of dihydrouracil)

### Confirmation ions

Running through m/z 115.050' (selected as precursor ions) at the first stage MS, fragmenting at a CID cell, generating 'm/z: 30.00', and running through m/z 30.00 (product ions) at the second stage MS.

### Target ions

Running through m/z 115.050' (selected as precursor ions) at the first stage MS, fragmenting at a CID cell, generating m/z 55.1, and running through m/z 55.1 (product ions) at the second stage MS.

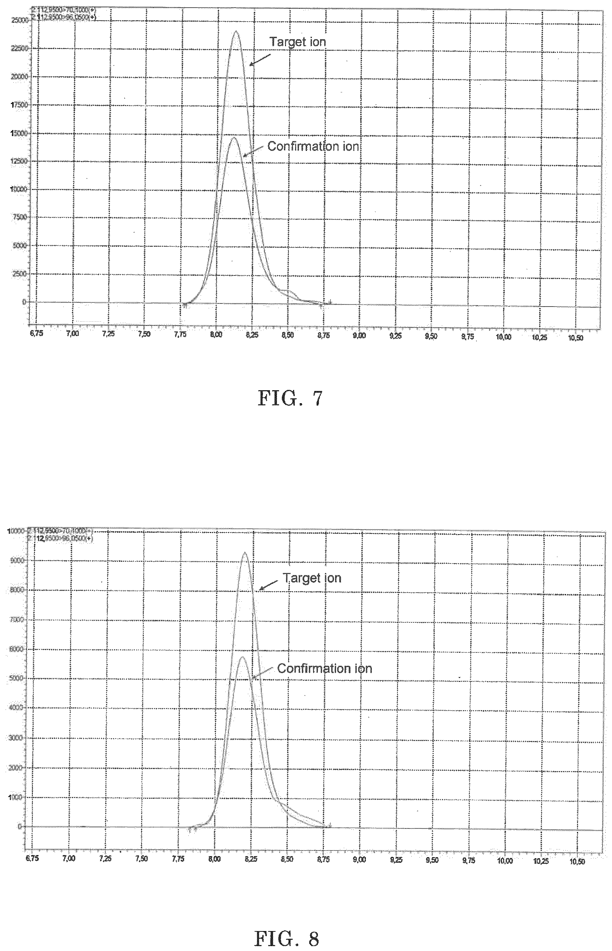

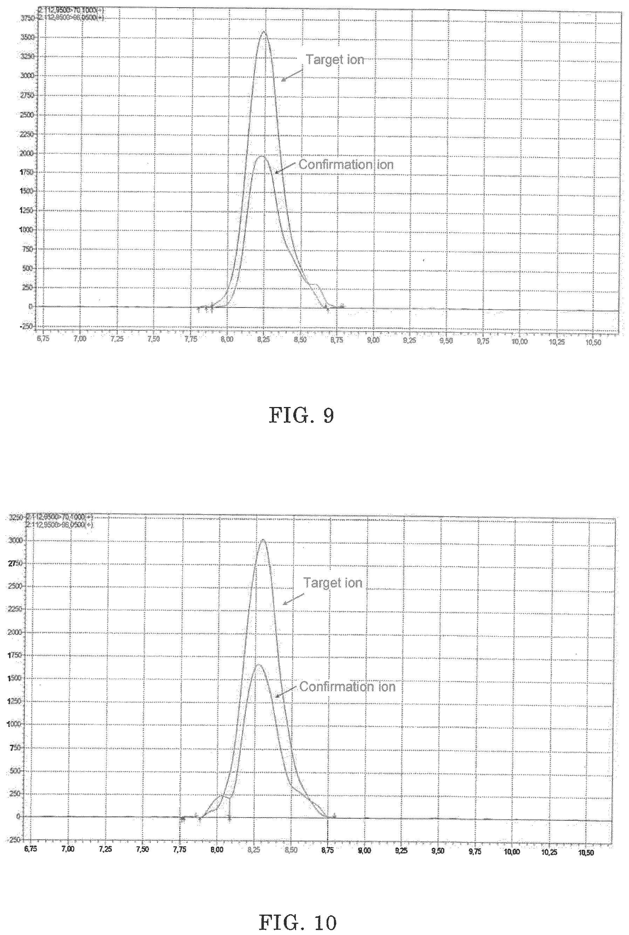

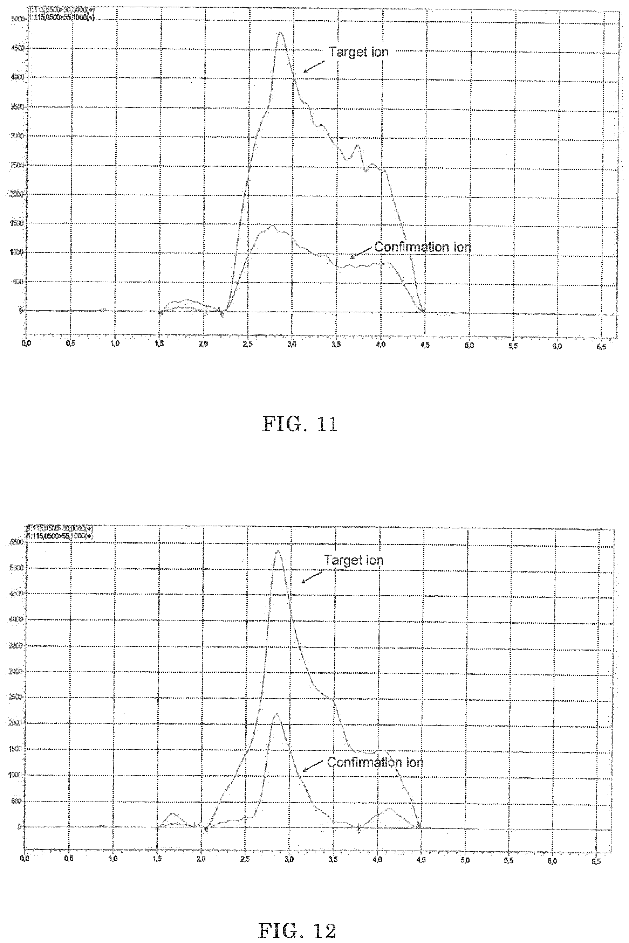

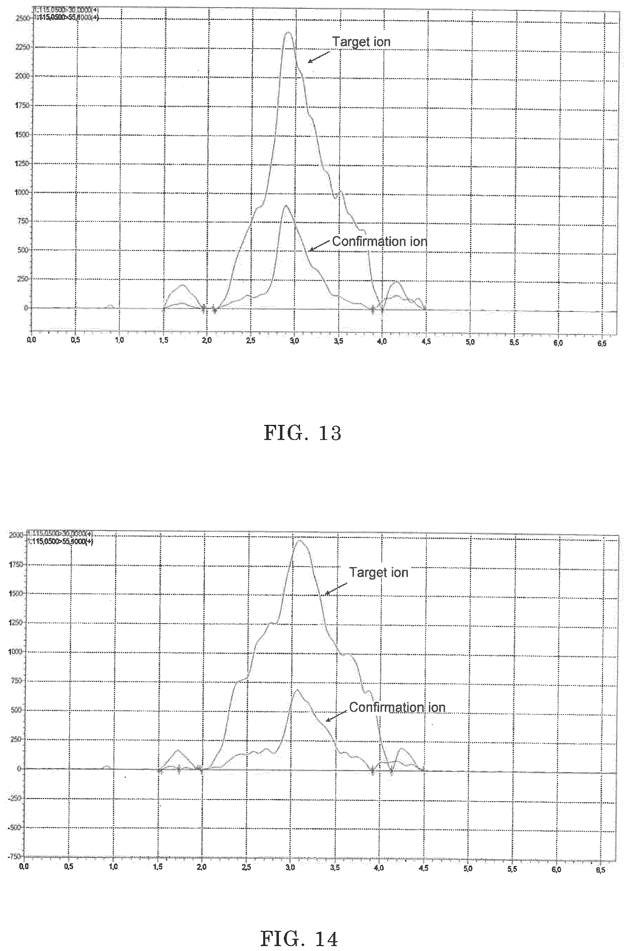

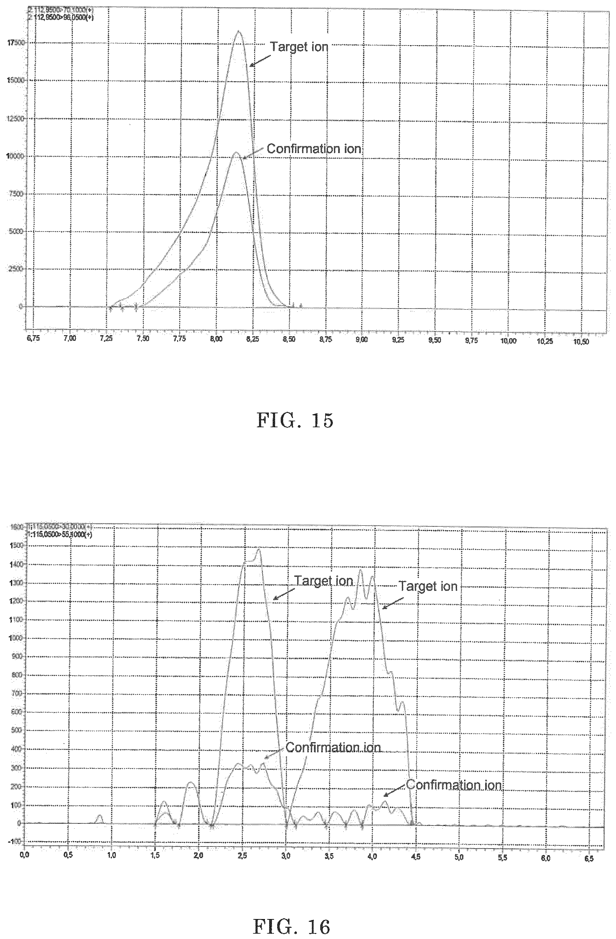

Mass spectrometry results of uracil with dilution rates of 5 times, 10 times, 40 times, and 50 times are given in from FIGS. 7 to 10, and mass spectrometry results of dihydrouracil are given in from FIGS. 11 to 14. Furthermore, for comparison, in the same manner as with the above working example, the obtained filtrate is separated through liquid chromatography without dilution, and the mass spectrometry results of the separated uracil and dihydrouracil are given in FIGS. 15 and 16, respectively.

Through comparison of from FIGS. 7 to 10 with FIG. 15, the matrix effect due to contaminants is reduced through dilution of the filtrate, achieving highly precise results in the separating step and the analyzing step. The same holds true for comparison of FIGS. 11 to 14 with FIG. 16.

Furthermore, use of the pretreatment apparatus 1 allows easy and quick measurement of the abundance ratio of uracil to dihydrouracil.

### Working Example 2

Using the pretreatment apparatus 100 (FIG. 2) illustrated in the Second Embodiment described above, reagent is dispensed into a specimen including uracil and dihydrouracil, the specimen and the reagent are mixed and stirred, and the obtained precipitate is filtrated and then diluted by the diluting liquid in the dilution port. The diluting liquid is separated into each component through liquid chromatography, and the respective separated components are analyzed using the mass spectrometer, thereby achieving the same results as with Working Example 1 described above.

### [Aspects]

It is understood by those skilled in the art that the embodiments described above are preferred specific examples of the following aspects.

[1] An analysis method comprising:
   dispensing step of sucking out a fixed amount of liquid from a specimen container stored with blood collected from a subject and a fixed amount of liquid from a reagent container stored with reagent, and dispensing the liquids into a reaction container;
   mixing step of mixing in the reaction container the blood and the reagent dispensed in the dispensing step;
   stirring step of stirring the mixture obtained in the mixing step;
   filtrating step of collecting filtrate by filtrating precipitant generated in the stirring step;
   separating step of separating the filtrate generated in the stirring step into each component through liquid chromatography; and
   analyzing step of analyzing the respective components separated in the separating step using a mass spectrometer, and carrying out qualitative analysis and quantitative analysis of at least one of 5-fluorouracil and 5-fluorodihydrouracil in the blood based on obtained mass spectrometry data; wherein
   the above respective steps are carried out automatically, and further comprising a diluting step of diluting the liquid obtained from at least one of the dispensing step, the mixing step, the stirring step, and the filtrating step.
   Uracil and dihydrouracil may be easily analyzed through the method described above.
[2] The analysis method of Item [1], further comprising a quantitative analysis step of determining the concentration of at least one of 5-fluorouracil and 5-fluorodihydrouracil confirmed in the blood based on the mass spectrometry data after the qualitative analysis.
[3] The analysis method of Item [1], wherein the blood is either blood plasma or blood serum.
[4] The analysis method of any one of Item [1] to Item [3], wherein the reagent is a mixture of acetonitrile and acetic acid.
[5] The analysis method of Item [1], wherein the diluting step dilutes the filtrate collected in the filtrating step; and the separating step separates the dilute filtrate diluted in the filtrating step, through chromatography, into each component.
[6] The analysis method of Item [5], wherein the diluting step dilutes the filtrate by less than 50 times.
[7] The analysis method of Item [6], wherein the diluting step dilutes the filtrate by 5 to 40 times.
[8] The analysis method of any one of Item [1] to Item [7], wherein the diluting step dilutes the filtrate with water.
   In addition to being able to easily analyze uracil and dihydrouracil through the methods of Items [2] through [8] described above, analysis precision may also be heightened.
[9] The analysis method of any one of Item [1] to Item [8], wherein the filtrating step uses a resin separative membrane.
[10] The analysis method of Item [9], wherein the resin separative membrane is a separative membrane made of polytetrafluoroethylene.
[11] The analysis method of any one of Item [1] to Item [10], wherein mobile phase in the separating step is at least either a mixture of water and acetic acid or a mixture of acetonitrile and acetic acid.
   Precision in the separating step may be increased through the methods of Items [9] to [11] described above, and analysis precision of uracil and dihydrouracil may be further heightened.
[12] The analysis method of Item [1], further including a collecting step of collecting the dilute filtrate after the diluting step and before the separating step.
[13] The analysis method of Item [12], further including a conveying step of conveying the collecting container to a position of conducting the liquid chromatography after the collecting step and before the separating step.
[14] The analysis methods of Item [1], Item [12], and Item [13], wherein at least the dispensing step to the filtrating step are carried out using a single pretreatment apparatus.
   Analysis of uracil and dihydrouracil may be carried out more easily through the methods of Items [12] to [14] described above.
[15] The analysis method of Item [13], wherein the dispensing step to the conveying step are carried out using a single pretreatment apparatus.
[16] The analysis method of either Item [14] or Item [15], wherein the pretreatment apparatus is a pretreatment apparatus comprising:
   a specimen rack holding one or more of a specimen container stored with blood collected from a subject;
   a reagent rack structured so as to hold one or more of a reagent container;
   a dispensing mechanism for sucking out a fixed amount of liquid from the specimen container and a fixed amount of liquid from the reagent container and dispensing the liquids into the reaction container;
   a stirring mechanism for stirring the mixture stored in the reaction container;
   a filtrating mechanism for collecting filtrate by filtrating precipitant in the reaction container; and
   a control unit for controlling the dispensing mechanism so as to suck out the blood from the specimen container and dispense the blood into the reaction container, and suck out the reagent from the reagent container and dispense the reagent into the reaction container.
[17] The analysis method of Item [16], wherein the pretreatment apparatus further comprises a holding mechanism that is movable between a first position and a second position, and that holds and conveys the collecting container, and
   the control unit controls the holding mechanism so as to convey the collecting container from the first position to the second position after the diluting step.

Analysis of uracil and dihydrouracil may be carried out more easily and quickly through the methods of Items [15] to [17] described above.

### [Description of References]

1, 100: Pretreatment apparatus
2: Specimen rack
4: Rack
6: Specimen container
8: Reagent rack
10: Reagent container
12: Pretreatment kit
20: Sampling arm
20a: Sampling nozzle
22, 29: Axis
24: Conveying arm
25: Holding part
26: Reagent arm
26a: Reagent-adding nozzle
30: Filtration port
32: Dispensation port
34: Disposal port
36: Stirring part
36a: Stirring port
42: Collecting container discharge part
43: Discharge port
44: Moving part
45: Cleaning port
50: Reaction container
50a: Inner space of reaction container
50b: Opening of reaction container
50c: Flange part of reaction container
50d: Discharge outlet
51: Skirt part
52: Separative membrane
54: Collecting container
54a: Inner space of collecting container
54b: Opening of collecting container
54c: Flange part of collecting container
60: Dilution port

## Claims

1. An analysis method comprising:
dispensing step of sucking out a fixed amount of liquid from a specimen container stored with blood collected from a subject and a fixed amount of liquid from a reagent container stored with reagent, and dispensing the liquids into a reaction container;
mixing step of mixing in the reaction container the blood and the reagent dispensed in the dispensing step;
stirring step of stirring the mixture obtained in the mixing step;
filtrating step of collecting filtrate by filtrating precipitant generated in the stirring step;
separating step of separating the filtrate generated in the stirring step into each component through liquid chromatography; and
analyzing step of analyzing the respective components separated in the separating step using a mass spectrometer, and carrying out qualitative analysis and quantitative analysis of at least one of 5-fluorouracil and 5-fluorodihydrouracil in the blood based on obtained mass spectrometry data; wherein
the above respective steps are carried out automatically, further comprising a diluting step of diluting the liquid obtained from at least one of the dispensing step, the mixing step, the stirring step, and the filtrating step.

2. The analysis method of Claim 1, further comprising a quantitative analysis step of determining the concentration of 5-fluorouracil and/ or 5-fluorodihydrouracil confirmed in the blood based on the mass spectrometry data after the qualitative analysis.

3. The analysis method of Claim 1, wherein the blood is either blood plasma or blood serum.

4. The analysis method of any one of Claim 1 to Claim 3, wherein the reagent is a mixture of acetonitrile and acetic acid.

5. The analysis method of any one of Claim 1 to Claim 4, wherein
the diluting step dilutes the filtrate collected in the filtrating step; and
the separating step separates the dilute filtrate diluted in the filtrating step, through chromatography, into each component.

6. The analysis method of Claim 5, wherein the diluting step dilutes the filtrate by less than 50 times.

7. The analysis method of Claim 6, wherein the diluting step dilutes the filtrate by 5 to 40 times.

8. The analysis method of any one of Claim 1 to Claim 7, wherein the diluting step dilutes the filtrate with water.

9. The analysis method of any one of Claim 1 to Claim 7, wherein the filtrating step uses a resin separative membrane.

10. The analysis method of Claim 9, wherein the resin separative membrane is a separative membrane made of polytetrafluoroethylene.

11. The analysis method of any one of Claim 1 to Claim 10, wherein mobile phase in the separating step is at least either a mixture of water and acetic acid or a mixture of acetonitrile and acetic acid.

12. The analysis method of Claim 1, further comprising a collecting step of collecting the dilute filtrate after the diluting step and before the separating step.

13. The analysis method of Claim 12, further comprising a conveying step of conveying the collecting container to a position of conducting the liquid chromatography after the collecting step and before the separating step.

14. The analysis methods of Claim 1, Claim 11, and Claim 13, wherein at least the dispensing step to the filtrating step are carried out using a single pretreatment apparatus.

15. The analysis method of Claim 13, wherein the dispensing step to the conveying step are carried out using a single pretreatment apparatus.

16. The analysis method of either Claim 13 or Claim 14, wherein the pretreatment apparatus is a pretreatment apparatus comprising:
a specimen rack holding one or more of a specimen container stored with blood collected from a subject;
a reagent rack structured so as to hold one or more of a reagent container;
a dispensing mechanism for sucking out a fixed amount of liquid from the specimen container and a fixed amount of liquid from the reagent container and dispensing the liquids into the reaction container;
a stirring mechanism for stirring the mixture stored in the reaction container;
a filtrating mechanism for collecting filtrate by filtrating precipitant in the reaction container; and
a control unit for controlling the dispensing mechanism so as to suck out the blood from the specimen container and dispense the blood into the reaction container, and suck out the reagent from the reagent container and dispense the reagent into the reaction container.

17. The analysis method of Claim 15, wherein the pretreatment apparatus further comprises a holding mechanism that is movable between a first position and a second position, and that holds and conveys the collecting container, and
the control unit controls the holding mechanism so as to convey the collecting container from the first position to the second position after the diluting step.
